# EUROPEAN PATENT SPECIFICATION

(11) **EP 3 913 125 B1**
(45) Date of publication and mention of the grant of the patent: **30.08.2023**
(21) Application number: 19910058.7
(22) Date of filing: 17.05.2019
(51) Int. Cl.: D04H 1/4374, D04H 1/542, D04H 1/593, D04H 1/60, D04H 1/4258, B32B 5/02, B32B 5/26, D01D 5/098

(54) **WEAR-RESISTANT WIPE AND MANUFACTURING METHOD THEREFOR**
VERSCHLEISSFESTES WISCHTUCH UND VERFAHREN ZU SEINER HERSTELLUNG
CHIFFON RÉSISTANT À L'USURE ET SON PROCÉDÉ DE FABRICATION

(30) Priority: 15.01.2019 CN 201910036152
(43) Date of publication of application: 24.11.2021
(73) Proprietor: Xiamen Yanjan New Material Co., Ltd, Xiamen, Fujian 361100 (CN)
(72) Inventor: ZHENG, Qingzhong, Xiamen, Fujian 361100 (CN); HE, Shunxin, Xiamen, Fujian 361100 (CN); WU, Danpin, Xiamen, Fujian 361100 (CN); XIE, Jihua, Xiamen, Fujian 361100 (CN)
(74) Representative: Cabinet Chaillot
(86) International application number: PCT/CN2019/087396
(87) International publication number: WO 2020/147228

(56) References cited:
- CN-A- 103 147 228
- CN-A- 105 431 120
- CN-A- 109 554 824
- US-A- 5 350 624
- US-A1- 2003 114 067
- US-A1- 2005 148 261
- US-A1- 2017 000 695
- US-B1- 6 550 115
- US-B2- 7 521 386

## Description

### BACKGROUND OF THE INVENTION

The present invention relates to wipe technology and more particularly pertains to an abrasion resistant wipe with good surface abrasion resistance and anti-pilling properties for personal and infant care and a manufacturing method therefor.

Wipes are very convenient to carry, store and use, so they are very popular among vast consumers. Wipes are commonly used in daily life, such as when a parent replaces a diaper, or when dining in a restaurant, or during cosmetic skin care. It is obvious that wipes are more and more widely applied in personal and infant care.

Wipes may be made of spunlace nonwoven fabric or spunbond nonwoven fabric. In comparison with traditional wipes made of cloth, such wipes are convenient to manufacture, low in price, and can be used in dry and wet.

Chinese invention patent application number CN1087392A discloses an abrasion resistant fiber nonwoven composite structure comprising the following two components: (1) a meltblown fiber substrate with a first outer surface, a second outer surface and an inner portion, and (2) at least one other fibrous material incorporated into the meltblown fiber substrate such that the concentration of the meltblown fibers near each outer surface of the nonwoven structure is at least about 60% by weight, and the concentration of the meltblown fibers at the inner portion is less than about 40% by weight. The wipe provides useful strength and low lint-shedding properties, as well as an abrasion resistance of at least 25% greater than the abrasion resistance of uniform mixtures of the same grade. By forming a more compact meltblown layer by the meltblown fibers on the surface, the wipe prevents to a certain extent the other fibrous material in the inner portion from falling out when in use. However, meltblown fibers are mostly formed by thermoplastic resins with higher melting points; when forming a consolidated meltblown layer, meltblown fibers are melted under high temperature after passing the thermal calendaring rollers, and thermal calendaring sites are formed under the action of a certain pressure, thereby consolidating the meltblown fibers together. As there is no adhesion among the meltblown fibers outside the thermal calendaring sites, the meltblown fibers without adhesion are prone to pilling after multiple frictions when in use, thus affecting the compactness of the surface layer and causing other fibrous material of the middle layer to fall out, therefore affecting usage life.

US2005/148261A1 discloses nonwoven webs having reduced levels of lint and slough. The nonwoven webs are treated on at least one surface with a small amount of a polymeric component. The polymeric component may be present, for instance, in the form of meltblown fibers. The meltblown fibers are made from a polymer that is compatible with the nonwoven web. By adding relatively small amounts of meltblown fibers to at least one side of the nonwoven material, lint and slough levels have been found to be significantly reduced. The nonwoven web may be any web containing pulp fibers, such as a tissue web or a coform web.

US2017/000695A1 discloses an enhanced, co-formed fibrous web structure. The web structure may have a co-formed core layer sandwiched between two scrim layers. The core layer may be formed of a blend of cellulose pulp fibers and melt spun filaments. The scrim layers may be formed of melt spun filaments. Filaments of one or both of the scrim layers, and optionally the core layer, may also be meltblown filaments. The core layer may include consolidated masses of cellulose pulp fibers to, for example, enhance texture and cleaning efficacy of a wet wipe made from the structure. The material forming the consolidated masses may be selected and/or processed so as to cause the masses to have reduced visual discernibility relative the surrounding areas of the structure, when the fibrous web structure is wetted. A method for forming the structure, including formation and inclusion of the consolidated masses, is also disclosed.

US2003/114067A1 discloses a coform nonwoven web from multicomponent meltblown filaments and an absorbent, wherein the absorbent material is substantially uniformly dispersed in the z-direction. A process of preparing the coform nonwoven web by perturbing the meltblown filaments as they are being produced is also disclosed. The coform material can be used in a variety of absorbent articles such as diapers as the primary liquid retention layer. In addition, the coform nonwoven web can be used in a variety of other articles such as wipes.

### BRIEF SUMMARY OF THE INVENTION

To overcome the shortcomings of existing products and manufacturing method, the present invention provides an abrasion resistant wipe with abrasion resistance and anti-pilling properties and a manufacturing method therefor.

To attain this, the present invention adopts the following technical solutions:
An abrasion resistant wipe has an upper layer and a lower layer each being a meltblown fiber web and a middle layer being a wood pulp fiber web; wherein the meltblown fiber web comprises meltblown fibers with fiber surface being high melting point resin and meltblown fibers with fiber surface comprising low melting point resin; there is a difference of ≥20°C between melting point of the low melting point resin and melting point of the high melting point resin; percentage of the meltblown fibers with fiber surface comprising low melting point resin in total fibers of the meltblown fiber web is greater than 5%; the meltblown fibers of the meltblown fiber web penetrates in the wood pulp fiber web.

The meltblown fibers with fiber surface comprising low melting point resin are single-component low melting point meltblown fibers, bicomponent meltblown fibers or a combination thereof.

The bicomponent meltblown fibers are bicomponent sheath-core type meltblown fibers, bicomponent orange peel type meltblown fibers or bicomponent side-by-side type meltblown fibers.

Percentage of the meltblown fibers with fiber surface comprising low melting point resin in total fibers of the meltblown fiber web is 30%-70%.

Weight of the wood pulp fiber web is more than 50% of total weight of the abrasion resistant wipe.

Weight of the wood pulp fiber web is 65%-80% of total weight of the abrasion resistant wipe.

The wood pulp fiber web comprises thermal melt adhesive.

A manufacturing method for the abrasion resistant wipe comprises the following steps:
(1) wood pulp is opened and loosened by an opening roller and then passes through a spray pipe under action of auxiliary air flow to form the wood pulp fiber web;
(2) by means of meltblown technology, two types of thermoplastic resins with melting points thereof differ from each other by ≥20°C are heated respectively and thereafter input to a spinning box after melting; in the spinning box, melt trickles of the thermoplastic resins exit from spinnerets are blown into fiber bundles with fiber diameter smaller than or equal to 10µm by high temperature and high speed hot air flow, thereby forming the meltblown fiber webs with the hot air flow; wherein each of the meltdown fiber webs comprises meltblown fibers with fiber surface being high melting point resin and meltblown fibers with fiber surface comprising low melting point resin; percentage of the meltblown fibers with fiber surface comprising low melting point resin in total fibers of the meltblown fiber webs is greater than 5%; the meltblown fiber webs intersect at two sides of the wood pulp fiber web to form a multi-layer structural fiber web with the meltblown fiber webs at two sides and the wood pulp fiber web in middle;
(3) fiber webs of the multi-layer structural fiber web are consolidated together by a heating device to form the abrasion resistant wipe with the upper layer and the lower layer being the meltblown fiber webs comprising meltblown fibers with fiber surface being high melting point resin and meltblown fibers with fiber surface comprising low melting point resin and the middle layer being the wood pulp fiber web.

The spinnerets comprise bicomponent spinning nozzles.

The bicomponent spinning nozzles on the spinnerets are sheath-core type, orange peel type or side-by-side type.

The heating device is a hot air drying oven, thermal calendaring rollers or a combination thereof.

In step (1), the wood pulp is opened and loosened by the opening roller, and is then mixed with thermal melt adhesive, and thereafter passes through the spray pipe under action of auxiliary air flow to form a wood pulp fiber web comprising the thermal melt adhesive.

With the aforementioned technical solutions, the abrasion resistant wipe of the present invention can be manufactured by the abrasion resistant wipe manufacturing method of the present invention. The meltblown fiber webs of the abrasion resistant wipe of the present invention comprises meltblown fibers with fiber surface being high melting point resin and meltblown fibers with fiber surface comprising low melting point resin, and percentage of the meltblown fibers with fiber surface comprising low melting point resin in total fibers of the meltblown fiber webs is greater than 5%; during manufacture, the low melting point resin on fiber surface of the meltblown fiber with fiber surface comprising low melting point resin melts in the heating device, so that the fibers adhere together. In this way, the overall strength of the wipe is increased, and the abrasion resistance of the wipe is also increased, so that no pilling or linting occurs during wiping; at the same time, the fiber size of the meltblown fiber webs is small, the arrangement is compact, and the fibers are adhered together, thereby further preventing the middle layer wood pulp short fibers from falling out.

### BRIEF DESCRIPTION OF THE DRAWINGS

FIG. 1 is a schematic view of the manufacture of the abrasion resistant wipe of Embodiment 1 of the present invention.
FIG. 2 is a sectional view of the abrasion resistant wipe of Embodiment 1 of the present invention.
FIG. 3 is a schematic view of the manufacture of the abrasion resistant wipe of Embodiment 2 of the present invention.
FIG. 4 is a sectional view of the abrasion resistant wipe of Embodiment 2 of the present invention.
FIG. 5A is a sectional view of the sheath-core type meltblown fiber of the present invention.
FIG. 5C is a sectional view of the bicomponent side-by-side type meltblown fiber of the present invention.

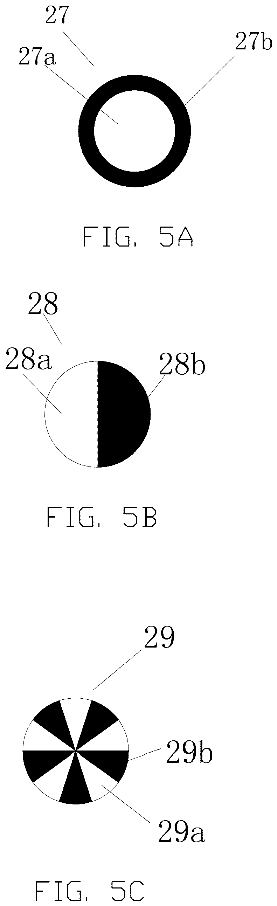

FIG. 5C is a sectional view of the bicomponent orange peel type meltblown fiber of the present invention.

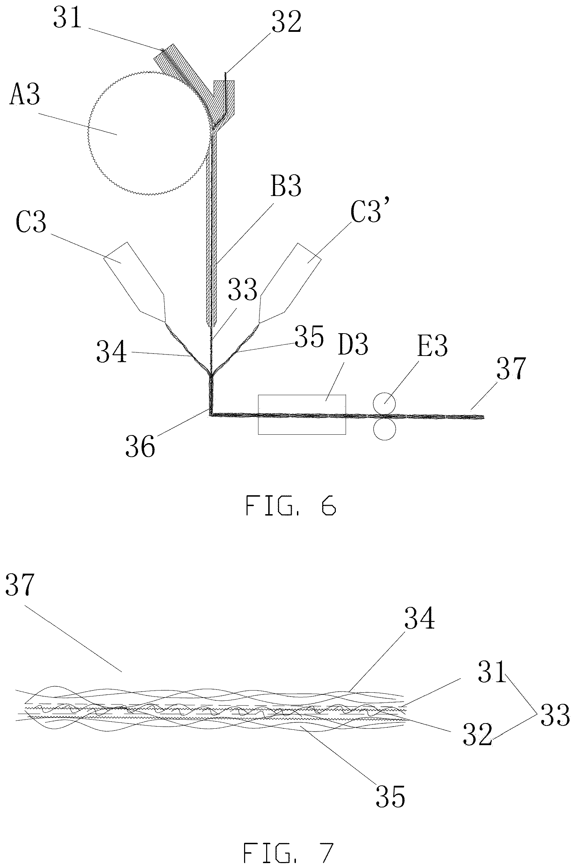

FIG. 6 is a schematic view of the manufacture of the abrasion resistant wipe of Embodiment 3 of the present invention.
FIG. 7 is a sectional view of the abrasion resistant wipe of Embodiment 3 of the present invention.

### Description of the reference labels:

### Embodiment 1:

| | |
|---|---|
| Wood pulp 11 | Wood pulp fiber web 12 |
| Meltblown fiber webs 13, 14 | |
| Multi-layer structural fiber web 15 | Abrasion resistant wipe 16 |
| Opening roller A1 | Spray pipe B1 |
| Spinnerets C1, C1' | |

### Embodiment 2

| | |
|---|---|
| Wood pulp 21 | Wood pulp fiber web 22 |
| Meltblown fiber webs 23, 24 | |
| Multi-layer structural fiber web 25 | Abrasion resistant wipe 26 |
| Opening roller A2 | Spray pipe B2 |
| Spinnerets C2, C2' | Thermal calendaring rollers E2 |
| Sheath-core type meltblown fiber 27 | |
| Bicomponent side-by-side type meltblown fiber 28 | |
| Bicomponent orange peel type meltblown fiber 29 | |
| Core layer resin 27a | Sheath layer resin 27b |
| One type of the resin 28b, 29b | |
| Another type of the resin 28a, 29a | |

### Embodiment 3

| | |
|---|---|
| Wood pulp 31 | Thermal melt adhesive 32 |
| Wood pulp fiber web 33 | |
| Meltblown fiber webs 34, 35 | |
| Multi-layer structural fiber web 36 | Abrasion resistant wipe 37 |
| Opening roller A3 | Spray pipe B3 |
| Spinnerets C3, C3' | Hot air drying oven D3 |
| Thermal calendaring rollers E3 | |

### DETAILED DESCRIPTION OF THE INVENTION

In order to further explain the technical solutions of the present invention, the present invention is described in details with reference to specific embodiments.

### Embodiment 1

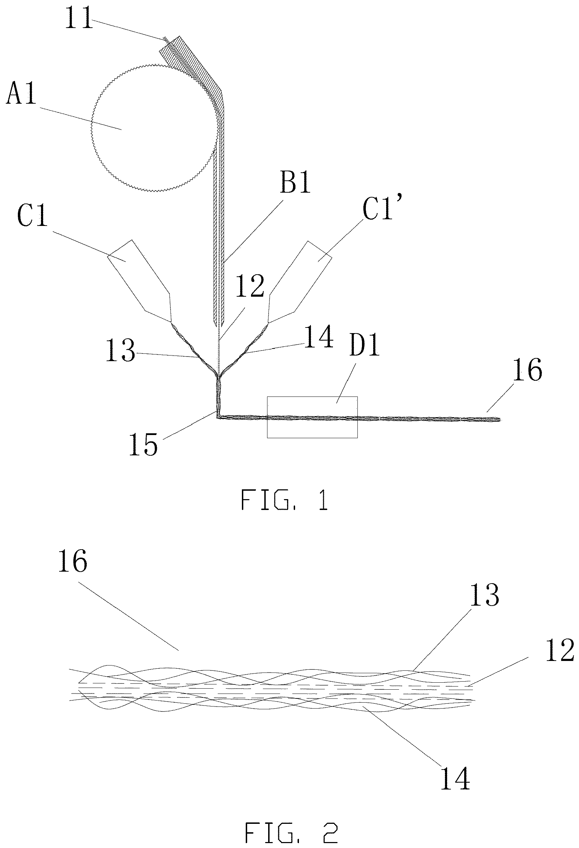

As shown in FIG. 1, the present invention discloses a manufacturing method for an abrasion resistant wipe comprising the following steps:
(1) Wood pulp 11 is opened and loosened by an opening roller A1 and then passes through a spray pipe B1 under action of auxiliary air flow to form a wood pulp fibrous web 12.
(2) By means of meltblown technology, high melting point thermoplastic resin (e.g. polypropylene PP) and low melting point thermoplastic resin (e.g. high density polyethylene HDPE) are heated respectively and thereafter input to a spinning box after melting; in the spinning box, melt trickles of the thermoplastic resins exit from spinnerets C1, C1' are blown into fiber bundles with fiber diameter smaller than or equal to 10µm by high temperature and high speed hot air flow, thereby forming meltblown fiber webs 13, 14 with the hot air flow; wherein the meltblown fiber webs 13, 14 each comprises meltblown fibers formed by high melting point thermoplastic resin PP with fiber surface being high melting point resin and single-component meltblown fibers formed by low melting point thermoplastic resin HDPE with fiber surface comprising low melting point resin, that is single-component low melting point meltblown fibers; percentage of the single-component meltblown fibers with fiber surface comprising low melting point resin in total fibers of the meltblown fiber webs 13, 14 is 40%; there is a difference of ≥20°C between melting point of the high melting point resin and melting point of the low melting point resin; the meltblown fiber webs 13, 14 intersect at two sides of the wood pulp fiber web 12 to form a multi-layer structural fiber web 15 with the meltblown fiber webs 13, 14 at two sides and the wood pulp fiber web 12 in middle.
(3) Fiber webs of the multi-layer structural fiber web 15 are consolidated together by a hot air drying oven D1 to form a wipe 16 with an upper layer and a lower layer being the meltblown fiber webs 13, 14 and a middle layer being the wood pulp fiber web 12.

As shown in FIG. 2, the present invention also discloses an abrasion resistant wipe manufactured by the aforementioned abrasion resistant wipe manufacturing method. It has a layered structure. The abrasion resistant wipe 16 has an upper layer and a lower layer being the meltblown fiber webs 13, 14 and a middle layer being the wood pulp fiber web 12. The meltblown fiber webs 13, 14 each comprises meltblown fibers formed by high melting point thermoplastic resin PP with fiber surface being high melting point resin and single-component meltblown fibers formed by low melting point thermoplastic resin HDPE with fiber surface comprising low melting point resin; there is a difference of ≥20°C between melting point of the high melting point resin and melting point of the low melting point resin; percentage of the single-component meltblown fibers with fiber surface comprising low melting point resin in total fibers of the meltblown fiber webs 13, 14 is 40%; the meltblown fibers of the meltblown fiber webs 13, 14 penetrate in the wood pulp fiber web 12.

### Abrasion resistance test

With reference to standard GB/T13775-92 "Testing method for determination of the resistance to abrasion of cotton, ramie and silk spinning fabrics"
Testing equipment: YG(B)401E Martindale abrasion tester

### Testing materials:

Standard backing: a standard felt with a weight in m² of 750±50g/m² , a thickness of 3±0.5mm and a diameter of 140mm.
Sample backing material: polyurethane foam with a thickness of 3±0.5mm, a density of 0.04g/cm³ and a diameter of 38±2mm.
Sample cutter: circular sample cutter with a sample diameter of 140mm for obtaining a lower layer abradant with a sample size of ϕ140mm.
Sample cutter: circular sample cutter with a sample diameter of 38mm for obtaining an upper layer abradant with a sample size of ϕ38mm.
Sample preprocessing: Testing samples are placed under room temperature for 24 hours.

### Testing steps:

1) Inspect components of the testing equipment to ensure normal operation of the testing equipment.
2) Obtain the lower layer abradant of ϕ140mm by the sample cutter with a diameter of 144mm and position the same on the standard backing, then position a sample loading hammer on the lower layer abradant and tighten the annular clamp to fix the abradant on a sample holder.
3) Obtain a sample of the upper layer abradant of ϕ38mm by the sample cutter with a diameter of 38mm, and by means of the sample cutter insert the sample into an A-type 200g abrasion head metal clamp; a polyurethane foam with a diameter of 38mm is positioned between the metal clamp and the abrasion head.
4) Position a sample clamp on an abrasion table so that a spindle passes through a bearing and insert on the sample clamp, then add a 395g weight (395g weight + 200g metal clamp weight produces a load of 583.1CN).
5) Switch on the equipment, set the rotation speed as 50 rotations per minute and number of rotations as 60; after setting, press "Start" button to start operation of the equipment; after completion of number of tests set by the equipment, the equipment stops; visually assess degree of pilling of the lower layer abradant.
6) Abrasion resistance assessment: determine abrasion resistance level with reference to abrasion resistance photographic standards.

**Table 1**

| Test item | Wipe sold in the market 1 | Wipe sold in the market 2 | The abrasion resistant wipe of the present invention |
|---|---|---|---|
| Abrasion resistance level | 3 | 4 | 2 |

As shown in the above table, in the abrasion resistant wipe 16 of the present invention, the meltblown fiber webs 13, 14 each comprises single-component meltblown fibers with fiber surface comprising low melting point resin; percentage of the single-component meltblown fibers with fiber surface comprising low melting point resin in total fibers of the meltdown fiber webs 13, 14 is 40%; during spinning, with arrangement of spinning nozzles, meltblown fibers with fiber surface being high melting point resin and single-component meltblown fibers with fiber surface comprising low melting point resin are mixed together, and when the meltblown fiber webs 13, 14 and the wood pulp fiber web 12 pass through the hot air drying oven D1, under action of hot air, surface of the single-component meltblown fibers with fiber surface comprising low melting point resin in the meltblown fiber webs 13, 14 starts to melt; as a result, the meltblown fibers adhere together, and the multi-layer structural fiber web 15 is adhered together to form the abrasion resistant wipe 16. In this way, the overall strength of the wipe is increased, and the abrasion resistance of the wipe is also increased, so that no pilling or linting occurs during wiping; at the same time, the fiber size of the meltblown fiber webs 13, 14 is small, the arrangement is compact, and the fibers are adhered together, thereby further preventing the middle layer wood pulp short fibers from falling out.

### Embodiment 2

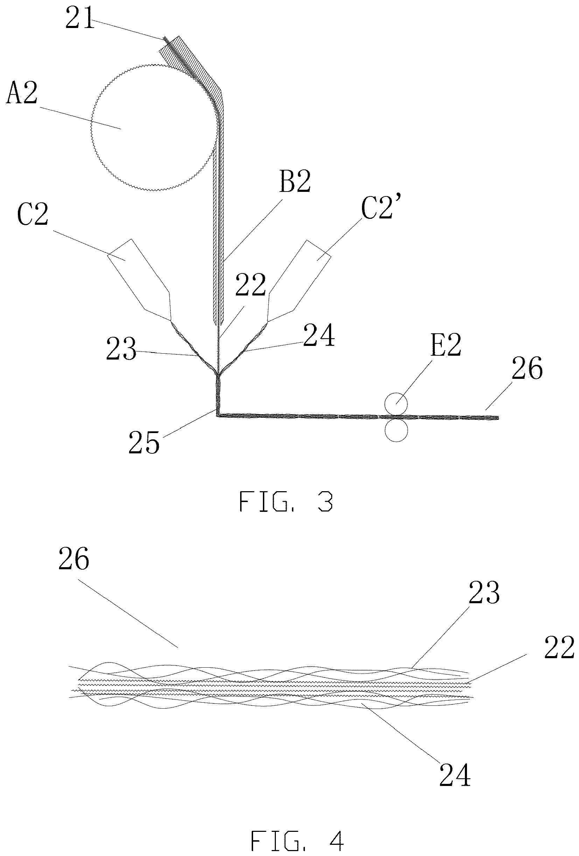

As shown in FIG. 3, the present invention discloses a manufacturing method for an abrasion resistant wipe comprising the following steps:
(1) Wood pulp 21 is opened and loosened by an opening roller A2 and then passes through a spray pipe B2 under action of auxiliary air flow to form a wood pulp fiber web 22.
(2) By means of meltblown technology, high melting point thermoplastic resin and low melting point thermoplastic resin are heated respectively and thereafter input to a spinning box after melting; in the spinning box, melt trickles of the thermoplastic resins exit from spinnerets C2, C2' are blown into fiber bundles with fiber diameter smaller than or equal to 10µm by high temperature and high speed hot air flow, thereby forming meltblown fiber webs 23, 24 with the hot air flow; wherein spinning nozzles on the spinnerets C2, C2' comprises bicomponent spinning nozzles; the bicomponent spinning nozzles on the spinnerets C2, C2' are sheath-core type, orange peel type or side-by-side type; the meltblown fiber webs 23, 24 passing through the bicomponent spinning nozzles comprise meltblown fibers with fiber surface being high melting point resin and bicomponent meltblown fibers with fiber surface comprising low melting point resin; as shown in FIGs. 5A to 5C, the bicomponent meltblown fibers are sheath-core type meltblown fibers 27, bicomponent orange peel type meltblown fibers 28 or bicomponent side-by-side type meltblown fibers 29, and there is a difference of ≥20°C between melting point of sheath layer resin 27b and melting point of core layer resin 27a of the sheath-core type meltblown fibers 27; there is a difference of ≥20°C between melting point of one type of the resin 28b, 29b and melting point of another type of the resin 28a, 29a of the bicomponent orange peel type meltblown fibers 28 and the bicomponent side-by-side type meltblown fibers 29; percentage of the bicomponent meltblown fibers in total fibers of the meltblown fiber webs 23, 24 is 50%; the meltblown fiber webs 23, 24 intersect at two sides of the wood pulp fiber web 22 to form a multi-layer structural fiber web 25 with the meltblown fiber webs 23, 24 comprising the bicomponent meltblown fibers at two sides and the wood pulp fiber web 22 in middle.
(3) Fiber webs of the multi-layer structural fiber web 25 are consolidated together by a pair of engaging thermal calendaring rollers E2 to form an abrasion resistant wipe 26 with an upper layer and a lower layer being the meltblown fiber webs 23, 24 comprising the bicomponent meltblown fibers and a middle layer being the wood pulp fiber web 22.

As shown in FIG. 4, the present invention also discloses an abrasion resistant wipe manufactured by the aforementioned abrasion resistant wipe manufacturing method. It has a layered structure. The abrasion resistant wipe 26 has an upper layer and a lower layer being the meltblown fiber webs 23, 24 and a middle layer being the wood pulp fiber web 22. The meltblown fiber webs 23, 24 each comprises meltblown fibers with fiber surface being high melting point resin and bicomponent meltblown fibers with fiber surface comprising low melting point resin; there is a difference of ≥20°C between melting point of the high melting point resin and melting point of the low melting point resin; the bicomponent meltblown fibers with fiber surface comprising low melting point resin are bicomponent sheath-core type meltblown fibers 27, bicomponent orange peel type meltblown fibers 28 or bicomponent side-by-side type meltblown fibers 29; percentage of the bicomponent meltblown fibers in total fibers of the meltblown fiber webs 23, 24 is 50%; the meltblown fibers of the meltblown fiber webs 23, 24 penetrate in the wood pulp fiber web 22.

In this embodiment, during spinning, with arrangement of the bicomponent spinning nozzles, meltblown fibers with fiber surface being high melting point resin and bicomponent meltblown fibers with fiber surface comprising low melting point resin are mixed together when forming the meltblown fibers, and when the wood pulp fiber web 12 and the meltblown fiber webs 13, 14 pass through the thermal calendaring rollers, thermal calendaring sites for melting can be formed under action of thermal calendaring pressure at thermal calendaring regions, while in non-thermal calendaring regions, due to action of temperature, low melting point resin at surface of the bicomponent meltblown fibers of the meltblown fiber webs 13, 14 starts to melt; as a result, the meltblown fibers adhere together, and the multi-layer structural fiber web 25 is consolidated together to form the abrasion resistant wipe 26. In this way, the abrasion resistance of the wipe is increased, so that no pilling or linting occurs during wiping; at the same time, the overall strength of the wipe is increased, facilitating multiple wiping.

### Embodiment 3

As shown in FIG. 6, the present invention discloses a manufacturing method for an abrasion resistant wipe comprising the following steps:
(1) Wood pulp 31 is opened and loosened by an opening roller A3, and is then mixed with thermal melt adhesive 32, and thereafter passes through a spray pipe B3 under action of auxiliary air flow to form a wood pulp fiber web 33 comprising the thermal melt adhesive.
(2) By means of meltblown technology, high melting point thermoplastic resin and low melting point thermoplastic resin are heated respectively and thereafter input to a spinning box after melting; in the spinning box, melt trickles of the thermoplastic resins exit from spinnerets C3, C3' are blown into fiber bundles with fiber diameter smaller than or equal to 10µm by high temperature and high speed hot air flow, thereby forming meltblown fiber webs 34, 35 with the hot air flow; wherein the meltblown fiber webs 34, 35 each comprises meltblown fibers with fiber surface being high melting point resin and meltblown fibers with fiber surface comprising low melting point resin; the meltblown fibers with fiber surface comprising low melting point resin are single-component low melting point meltblown fibers and bicomponent meltblown fibers; percentage of the meltblown fibers with fiber surface comprising low melting point resin in total fibers of the meltblown fiber webs 34, 35 is 20%; there is a difference of ≥20°C between melting point of the low melting point resin and melting point of the high melting point resin; the meltblown fiber webs 34, 35 intersect at two sides of the wood pulp fiber web 33 comprising the thermal melt adhesive to form a multi-layer structural fiber web 36 with the meltblown fiber webs 34, 35 at two sides and the wood pulp fiber web 33 comprising the thermal melt adhesive in middle.
(3) Fiber webs of the multi-layer structural fiber web 36 are consolidated together by a hot air drying oven D3 and a pair of engaging thermal calendaring rollers E3 to form an abrasion resistant wipe 37 with an upper layer and a lower layer being the meltblown fiber webs 34, 35 comprising the single-component low melting point meltblown fibers and bicomponent meltblown fibers and a middle layer being the wood pulp fiber web 33 comprising the thermal melt adhesive 32.

As shown in FIG. 7, the present invention also discloses an abrasion resistant wipe manufactured by the aforementioned abrasion resistant wipe manufacturing method. It has a layered structure. The abrasion resistant wipe 37 has an upper layer and a lower layer being the meltblown fiber webs 35, 36 and a middle layer being the wood pulp fiber web 33 comprising the thermal melt adhesive 32. The meltblown fiber webs 34, 35 each comprises meltblown fibers with fiber surface being high melting point resin and single-component meltblown fibers with fiber surface comprising low melting point resin; there is a difference of ≥20°C between melting point of the high melting point resin and melting point of the low melting point resin; the single-component meltblown fibers are single-component low melting point meltblown fibers and bicomponent meltblown fibers; percentage of the single-component low melting point meltblown fibers in total fibers of the meltblown fiber webs 34, 35 is 20%; the meltblown fibers of the meltblown fiber webs 34, 35 penetrate in the wood pulp fiber web 33.

In this embodiment, the wood pulp fiber web 33 of the middle layer is added with the thermal melt adhesive 32; in the hot air drying oven D3, the thermal melt adhesive 32 surface starts to melt, thereby fixing the wood pulp short fibers in the middle layer to a certain extent; as a result, the wood pulp short fibers are difficult to move, thus preventing linting during use of the wipe, reducing pilling of the wipe and increasing abrasion resistance.

## Claims

1. An abrasion resistant wipe, **characterized in that** the abrasion resistant wipe has an upper layer and a lower layer each being a meltblown fiber web and a middle layer being a wood pulp fiber web; wherein the meltblown fiber web comprises meltblown fibers with fiber surface being high melting point resin and meltblown fibers with fiber surface comprising low melting point resin; there is a difference of ≥20°C between melting point of the low melting point resin and melting point of the high melting point resin; percentage of the meltblown fibers with fiber surface comprising low melting point resin in total fibers of the meltblown fiber web is greater than 5%; the meltblown fibers of the meltblown fiber web penetrates in the wood pulp fiber web.

2. The abrasion resistant wipe as in Claim 1, **characterized in that**: the meltblown fibers with fiber surface comprising low melting point resin are single-component low melting point meltblown fibers, bicomponent meltblown fibers or a combination thereof.

3. The abrasion resistant wipe as in Claim 2, **characterized in that**: the bicomponent meltblown fibers are bicomponent sheath-core type meltblown fibers, bicomponent orange peel type meltblown fibers or bicomponent side-by-side type meltblown fibers.

4. The abrasion resistant wipe as in Claim 1, **characterized in that**: percentage of the meltblown fibers with fiber surface comprising low melting point resin in total fibers of the meltblown fiber web is 30%-70%.

5. The abrasion resistant wipe as in Claim 1, **characterized in that**: weight of the wood pulp fiber web is more than 50% of total weight of the abrasion resistant wipe.

6. The abrasion resistant wipe as in Claim 1, **characterized in that**: weight of the wood pulp fiber web is 65%-80% of total weight of the abrasion resistant wipe.

7. The abrasion resistant wipe as in Claim 1, **characterized in that**: the wood pulp fiber web comprises thermal melt adhesive.

8. A manufacturing method for the abrasion resistant wipe as in Claim 1, **characterized in that**: it comprises the following steps: (1) wood pulp is opened and loosened by an opening roller and then passes through a spray pipe under action of auxiliary air flow to form the wood pulp fiber web; (2) by means of meltblown technology, two types of thermoplastic resins with melting points thereof differ from each other by ≥20°C are heated respectively and thereafter input to a spinning box after melting; in the spinning box, melt trickles of the thermoplastic resins exit from spinnerets are blown into fiber bundles with fiber diameter smaller than or equal to 10 µm by high temperature and high speed hot air flow, thereby forming the meltblown fiber webs with the hot air flow; wherein each of the meltblown fiber webs comprises meltblown fibers with fiber surface being high melting point resin and meltblown fibers with fiber surface comprising low melting point resin; percentage of the meltblown fibers with fiber surface comprising low melting point resin in total fibers of the meltblown fiber webs is greater than 5%; the meltblown fiber webs intersect at two sides of the wood pulp fiber web to form a multi-layer structural fiber web with the meltblown fiber webs at two sides and the wood pulp fiber web in middle; (3) fiber webs of the multi-layer structural fiber web are consolidated together by a heating device to form the abrasion resistant wipe with the upper layer and the lower layer being the meltblown fiber webs comprising meltblown fibers with fiber surface being high melting point resin and meltblown fibers with fiber surface comprising low melting point resin and the middle layer being the wood pulp fiber web.

9. The manufacturing method for the abrasion resistant wipe as in Claim 8, **characterized in that**: the spinnerets comprise bicomponent spinning nozzles.

10. The manufacturing method for the abrasion resistant wipe as in Claim 9, **characterized in that**: the bicomponent spinning nozzles on the spinnerets are sheath-core type, orange peel type or side-by-side type.

11. The manufacturing method for the abrasion resistant wipe as in Claim 8, **characterized in that**: the heating device is a hot air drying oven, thermal calendaring rollers or a combination thereof.

12. The manufacturing method for the abrasion resistant wipe as in Claim 8, **characterized in that**: in step (1), the wood pulp is opened and loosened by the opening roller, and is then mixed with thermal melt adhesive, and thereafter passes through the spray pipe under action of auxiliary air flow to form a wood pulp fiber web comprising the thermal melt adhesive.

## Patentansprüche

1. - Abriebfestes Wischtuch, **dadurch gekennzeichnet, dass** das abriebfeste Wischtuch eine obere Lage und eine untere Lage, die jeweils ein Gewebe aus schmelzgeblasenen Fasern sind, und eine mittlere Lage, die ein Zellstofffasergewebe ist, aufweist; wobei das Gewebe aus schmelzgeblasenen Fasern schmelzgeblasene Fasern mit einer Faseroberfläche aus hochschmelzendem Harz und schmelzgeblasene Fasern mit einer Faseroberfläche umfasst, die niedrigschmelzendes Harz umfasst; sich der Schmelzpunkt des niedrigschmelzenden Harzes und der Schmelzpunkt des hochschmelzenden Harzes um ≥ 20 °C unterscheiden; der Prozentsatz der schmelzgeblasenen Fasern mit einer Faseroberfläche, die niedrigschmelzendes Harz umfasst, in Bezug auf Gesamtfasern des Gewebes aus schmelzgeblasenen Fasern mehr als 5 % beträgt; die schmelzgeblasenen Fasern des Gewebe aus schmelzgeblasenen Fasern in das Zellstofffasergewebe eindringen

2. - Abriebfestes Wischtuch nach Anspruch 1, **dadurch gekennzeichnet, dass**: die schmelzgeblasenen Fasern mit einer Faseroberfläche, die niedrigschmelzendes Harz umfasst, niedrigschmelzende schmelzgeblasene EinKomponenten-Fasern, schmelzgeblasene Zwei-Komponenten-Fasern oder eine Kombination daraus sind.

3. - Abriebfestes Wischtuch nach Anspruch 2, **dadurch gekennzeichnet, dass**: die schmelzgeblasenen Zwei-Komponenten-Fasern schmelzgeblasene Zwei-Komponenten-Fasern vom Mantel-Kern-Typ, schmelzgeblasene Zwei-Komponenten-Fasern vom Orangenschalentyp oder schmelzgeblasene Zwei-Komponenten-Fasern vom Seite-an-Seite-Typ sind.

4. - Abriebfestes Wischtuch nach Anspruch 1, **dadurch gekennzeichnet, dass**: ein Prozentsatz der schmelzgeblasenen Fasern mit einer Faseroberfläche, die niedrigschmelzendes Harz umfasst, in Bezug auf Gesamtfasern des Gewebes aus schmelzgeblasenen Fasern 30 % bis 70 % beträgt.

5. - Abriebfestes Wischtuch nach Anspruch 1, **dadurch gekennzeichnet, dass**: ein Gewicht des Zellstofffasergewebes mehr als 50 % eines Gesamtgewichts des abriebfesten Wischtuchs beträgt.

6. - Abriebfestes Wischtuch nach Anspruch 1, **dadurch gekennzeichnet, dass**: ein Gewicht des Zellstofffasergewebes 65 % bis 80 % eines Gesamtgewichts des abriebfesten Wischtuchs beträgt.

7. - Abriebfestes Wischtuch nach Anspruch 1, **dadurch gekennzeichnet, dass**: das Zellstofffasergewebe Heißklebstoff umfasst.

8. - Verfahren zum Herstellen des abriebfesten Wischtuchs nach Anspruch 1, **dadurch gekennzeichnet, dass**: es die folgenden Schritte umfasst: (1) Zellstoff wird durch eine Auflösewalze aufgelöst und gelockert und läuft danach durch ein Sprührohr unter Einwirkung eines Luftnebenstroms zur Ausbildung des Zellstofffasergewebes; (2) mithilfe von Schmelzblastechnologie zwei Arten von thermoplastischen Harzen mit sich um ≥ 20 °C voneinander unterscheidenden Schmelzpunkten werden jeweils erhitzt und nach dem Schmelzen sodann in eine Spinnbox eingebracht; in der Spinnbox werden Schmelzetropfen der aus Spinndüsenanordnungen austretenden thermoplastischen Harze durch hohe Temperatur und einen Hochgeschwindigkeits-Heißluftstrom zu Faserbündeln geblasen, deren Faserdurchmesser höchstens 10 µm beträgt, wodurch die Gewebe aus schmelzgeblasenen Fasern mit dem Heißluftstrom ausgebildet werden; wobei jedes der Gewebe aus schmelzgeblasenen Fasern schmelzgeblasene Fasern mit einer Faseroberfläche aus hochschmelzendem Harz und schmelzgeblasene Fasern mit einer Faseroberfläche umfasst, die niedrigschmelzendes Harz umfasst; ein Prozentsatz der schmelzgeblasenen Fasern mit einer Faseroberfläche, die niedrigschmelzendes Harz umfasst, in Bezug auf Gesamtfasern der Gewebe aus schmelzgeblasenen Fasern mehr als 5 % beträgt; sich die Gewebe aus schmelzgeblasenen Fasern an zwei Seiten des Zellstofffasergewebes schneiden, um ein mehrlagiges Strukturfasergewebe zu bilden, wobei die Gewebe aus schmelzgeblasenen Fasern an zwei Seiten vorliegen und das Zellstofffasergewebe in der Mitte vorliegt; (3) Fasergewebe des mehrlagigen Strukturfasergewebes durch eine Heizvorrichtung miteinander verbunden werden, um das abriebfeste Wischtuch auszubilden, wobei die obere Lage und die untere Lage die Gewebe aus schmelzgeblasenen Fasern sind, die schmelzgeblasene Fasern mit einer Faseroberfläche aus hochschmelzendem Harz und schmelzgeblasene Fasern mit einer Faseroberfläche umfassen, die niedrigschmelzendes Harz umfasst, und wobei die mittlere Lage das Zellstofffasergewebe ist.

9. - Verfahren zum Herstellen des abriebfesten Wischtuchs nach Anspruch 8, **dadurch gekennzeichnet, dass**: die Spinndüsenanordnungen Zwei-Komponenten-Spinndüsen umfassen.

10. - Verfahren zum Herstellen des abriebfesten Wischtuchs nach Anspruch 9, **dadurch gekennzeichnet, dass**: die Zwei-Komponenten-Spinndüsen auf den Spinndüsenanordnungen vom Mantel-Kern-Typ, Orangenschalentyp oder Seite-an-Seite-Typ sind.

11. - Verfahren zum Herstellen des abriebfesten Wischtuchs nach Anspruch 8, **dadurch gekennzeichnet, dass**: die Heizvorrichtung ein Heißlufttrocknungsofen, Wärmekalanderwalzen oder eine Kombination daraus ist.

12. - Verfahren zum Herstellen des abriebfesten Wischtuchs nach Anspruch 8, **dadurch gekennzeichnet, dass**: in Schritt (1) der Zellstoff durch die Auflösewalze aufgelöst und gelockert und danach mit Heißklebstoff vermischt wird und dann das Sprührohr unter Einwirkung eines Luftnebenstroms durchläuft, um ein Zellstofffasergewebe auszubilden, das den Heißklebstoff umfasst.

## Revendications

1. - Lingette résistante à l'abrasion, **caractérisée par le fait que** la lingette résistante à l'abrasion a une couche supérieure et une couche inférieure, chacune étant une bande de fibres de fusion-soufflage, et une couche centrale qui est une bande de fibres de pâte de bois ; dans laquelle la bande de fibres de fusion-soufflage comprend des fibres de fusion-soufflage dont la surface de fibre est une résine à point de fusion élevé et des fibres de fusion-soufflage dont la surface de fibre comprend une résine à point de fusion bas ; il y a une différence de ≥ 20°C entre le point de fusion de la résine à point de fusion bas et le point de fusion de la résine à point de fusion élevé ; un pourcentage des fibres de fusion-soufflage dont la surface de fibre comprend une résine à point de fusion bas par rapport au nombre total de fibres de la bande de fibres de fusion-soufflage est supérieur à 5 % ; les fibres de fusion-soufflage de la bande de fibres de fusion-soufflage pénètrent dans la bande de fibres de pâte de bois.

2. - Lingette résistante à l'abrasion selon la revendication 1, **caractérisée par le fait que** : les fibres de fusion-soufflage dont la surface de fibre comprend une résine à point de fusion bas sont des fibres de fusion-soufflage à point de fusion bas monocomposant, des fibres de fusion-soufflage à deux composants ou une combinaison de celles-ci.

3. - Lingette résistante à l'abrasion selon la revendication 2, **caractérisée par le fait que** : les fibres de fusion-soufflage à deux composants sont des fibres de fusion-soufflage à deux composants de type à gaine/âme, des fibres de fusion-soufflage à deux composants de type à peau d'orange ou des fibres de fusion-soufflage à deux composants de type juxtaposé.

4. - Lingette résistante à l'abrasion selon la revendication 1, **caractérisée par le fait que** : le pourcentage de fibres de fusion-soufflage dont la surface de fibre comprend une résine à point de fusion bas par rapport au nombre total de fibres de la bande de fibres de fusion-soufflage est de 30 % - 70 %.

5. - Lingette résistante à l'abrasion selon la revendication 1, **caractérisée par le fait que** : le poids de la bande de fibres de pâte de bois est supérieur à 50 % du poids total de la lingette résistante à l'abrasion.

6. - Lingette résistante à l'abrasion selon la revendication 1, **caractérisée par le fait que** : le poids de la bande de fibres de pâte de bois est de 65 % - 80 % du poids total de la lingette résistante à l'abrasion.

7. - Lingette résistante à l'abrasion selon la revendication 1, **caractérisée par le fait que** : la bande de fibres de pâte de bois comprend un adhésif thermofusible.

8. - Procédé de fabrication de la lingette résistante à l'abrasion selon la revendication 1, **caractérisé par le fait qu'**il comprend les étapes suivantes : (1) de la pâte de bois est ouverte et desserrée par un rouleau d'ouverture, puis passe à travers un tuyau de pulvérisation sous l'action d'un écoulement d'air auxiliaire pour former la bande de fibres de pâte de bois ; (2) au moyen d'une technologie de fusion-soufflage, deux types de résines thermoplastiques dont les points de fusion diffèrent l'un de l'autre de ≥ 20°C sont chauffés respectivement, puis introduits dans une boîte de filage après la fusion ; dans la boîte de filage, des gouttes de fusion des résines thermoplastiques sortant de filières sont soufflées en faisceaux de fibres avec un diamètre de fibre inférieur ou égal à 10 um par un écoulement d'air chaud à haute température et à haute vitesse, formant ainsi les bandes de fibres de fusion-soufflage avec l'écoulement d'air chaud ; chacune des bandes de fibres de fusion-soufflage comprenant des fibres de fusion-soufflage dont la surface de fibre est une résine à point de fusion élevé et des fibres de fusion-soufflage dont la surface de fibre comprend une résine à point de fusion bas ; le pourcentage des fibres de fusion-soufflage dont la surface de fibre comprend une résine à point de fusion bas par rapport au nombre total de fibres des bandes de fibres de fusion-soufflage étant supérieur à 5 % ; les bandes de fibres de fusion-soufflage se croisant à deux côtés de la bande de fibres de pâte de bois pour former une bande de fibres structurale multicouches avec les bandes de fibres de fusion-soufflage sur deux côtés et la bande de fibres de pâte de bois au milieu ; (3) les bandes de fibres de la bande de fibres structurale multicouches sont consolidées ensemble par un dispositif chauffant pour former la lingette résistante à l'abrasion, la couche supérieure et la couche inférieure étant les bandes de fibres de fusion-soufflage comprenant des fibres de fusion-soufflage dont la surface de fibre est une résine à point de fusion élevé et des fibres de fusion-soufflage dont la surface de fibre comprend une résine à point de fusion bas, et la couche centrale étant la bande de fibres de pâte de bois.

9. - Procédé de fabrication de la lingette résistante à l'abrasion selon la revendication 8, **caractérisé par le fait que** : les filières comprennent des buses de filage à deux composants.

10. - Procédé de fabrication de la lingette résistante à l'abrasion selon la revendication 9, **caractérisé par le fait que** : les buses de filage à deux composants sur les filières sont du type à gaine/âme, du type à peau d'orange ou du type juxtaposé.

11. - Procédé de fabrication de la lingette résistante à l'abrasion selon la revendication 8, **caractérisé par le fait que** : le dispositif chauffant est un four de séchage à air chaud, des rouleaux de calandrage thermique ou une combinaison de ceux-ci.

12. - Procédé de fabrication de la lingette résistante à l'abrasion selon la revendication 8, **caractérisé par le fait que** : à l'étape (1), la pâte de bois est ouverte et desserrée par le rouleau d'ouverture, puis est mélangée à un adhésif thermofusible, et passe ensuite à travers le tuyau de pulvérisation sous l'action d'un écoulement d'air auxiliaire pour former une bande de fibres de pâte de bois comprenant l'adhésif thermofusible.
